# EUROPEAN PATENT APPLICATION

(11) **EP 4 235 554 A1**
(43) Date of publication of application: **30.08.2023**
(21) Application number: 21898214.8
(22) Date of filing: 05.01.2021
(51) Int. Cl.: G06Q 30/02, G06Q 40/02, G06F 3/041

(54) **REMOTE CONSULTING SERVICE SYSTEM AND METHOD**

(30) Priority: 27.11.2020 KR 20200163268; 27.11.2020 KR 20200163269
(71) Applicant: HYOSUNG TNS INC., Gangnam-gu, Seoul 06349 (KR)
(72) Inventor: KANG, Jin Hyeon, Seoul 06326 (KR); YOON, Tae Ho, Uijeongbu-si, Gyeonggi-do 11680 (KR); LEE, Joo Yong, Seoul 07539 (KR); YOON, Young Jin, Seoul 08862 (KR); SEO, Myong Won, Seongnam-si, Gyeonggi-do 13564 (KR); LEE, Ki Hang, Namyangju-si, Gyeonggi-do 12284 (KR)
(74) Representative: BCKIP Part mbB
(86) International application number: PCT/KR2021/000065
(87) International publication number: WO 2022/114384

(57) **Abstract**

A remote consulting service system includes: a banking host server; a consultant terminal including an application processor (AP) accessible to the banking host server and a video connection unit for performing video connection with a digital desk apparatus; the digital desk apparatus that performs video connection with the consultant terminal, and that when receiving a data input request from the consultant terminal, displays a screen related to the data input request; and a digital desk server that when receiving a consultation request of a customer from the digital desk apparatus, requests a plurality of consultant terminals on standby to accept consultation based on the customer's consultation request, and that receives consultation acceptance information from the consultant terminal among the plurality of consultant terminals.

## Description

### TECHNICAL FIELD

Embodiments relate to a remote consulting service system and method capable of non-face-to-face consulting with a customer in the absence of a consultant.

### BACKGROUND ART

In general, in accordance with the continuous development of information and communication technology, financial transactions that have conventionally been made through face-to-face authentication have recently been changed to a non-face-to-face financial transaction method using non-face-to-face authentication based on a wired communication network or a wireless communication network, and currently among the non-face-to-face financial transactions, the amount of financial transactions through internet banking alone reaches tens of trillions in KRW per day.

A consultant, who works in a bank, may be absent due to toilet, vacation, or lunch, and accordingly, it is difficult to utilize the seat occupied by the consultant.

In other words, in the case of a conventional consulting service method, a limited working environment, and difficult adjustment of supply and demand of consulting personnel are burdened with a lot of operating expenses.

Accordingly, recently, with the development of information and communication technology, the penetration rate of smart phones is very high, and many financial institutions provide customer center services through smart phone applications.

The customer center service through the smartphone application provides services for frequently used menus among the menus provided by an ARS system, and has advantages in terms of time and cost compared to existing customer center service methods.

However, the customer center service through the smartphone application is only capable of simple inquiries, and it is difficult to accurately satisfy customer needs, such as consulting through a consultant.

In addition, as financial works increase to meet customer needs, the consultant's smartphone application needs to be modified to add new functions or the program thereof needs to be completely changed, resulting in a significant cost for development and replacement.

### DETAILED DESCRIPTION OF INVENTION

### TECHNICAL PROBLEMS

In order to solve the above problems, embodiments provide a remote consulting service system and method capable of performing non-face-to-face banking services.

### TECHNICAL SOLUTION

A remote consulting service system according to an embodiment may include: a banking host server; a consultant terminal including an application processor (AP) accessible to the banking host server and a video connection unit for performing video connection with a digital desk apparatus; the digital desk apparatus that performs video connection with the consultant terminal, and that when receiving a data input request from the consultant terminal, displays a screen related to the data input request; and a digital desk server that when receiving a consultation request of a customer from the digital desk apparatus, requests a plurality of consultant terminals on standby to accept consultation based on the customer's consultation request, and that receives consultation acceptance information from the consultant terminal among the plurality of consultant terminals.

The digital desk apparatus may include an application program interface (API) for communicating with the consultant terminal and the digital desk server.

The digital desk apparatus may include an image display unit, a touch input unit, a scanner, a pin pad, and a printer, and the digital desk apparatus may display the data input request and control at least one of the image display unit, the touch input unit, the scanner, the pin pad, and the printer to input a response to the data input request.

The digital desk server may determine a business type based on the customer's consulting request, and request consultation acceptance to a plurality of consultant terminals corresponding to the determined business type.

The digital desk apparatus may include: a desk; at least one image display unit disposed on the desk; and a touch input unit disposed on the desk where the customer is seated.

According to the embodiment, a remote consulting service method performed in a digital desk server may include: receiving a customer's consultation request from a digital desk apparatus; requesting consultation acceptance through plug-ins installed in a plurality of consultant terminals on standby based on the customer's consulting request; receiving consultation acceptance information from any of the plurality of consultant terminals; and controlling video connection between the consultant terminal and the digital desk apparatus based on the consultation acceptance information.

The requesting consultation acceptance to the plurality of consultant terminals may include determining a business type based on the customer's consultation request, and request acceptance of consultation to a plurality of consultant terminals corresponding to the determined business type.

A remote consulting service system according to the embodiment may include: a banking host server; a consultant terminal including a first AP accessible to the banking host server and a second AP accessible to the banking host server through communication with the first AP; a digital desk server that when receiving a consultation request of a customer, requests the consultant terminal on standby among a plurality of consultant terminals on standby to accept consultation based on the customer's consultation request through the second AP, and that receives consultation acceptance information from the second AP of the consultant terminal; and a digital desk apparatus that performs video connection with the consultant terminal, and that when receiving a data input request from the consultant terminal through the second AP, displays a screen related to the data input request.

The digital desk apparatus may include an API for communicating with the second AP and the digital desk server.

The digital desk apparatus may include an image display unit, a touch input unit, a scanner, a pin pad, and a printer, and the digital desk apparatus may display the data input request and control at least one of the image display unit, the touch input unit, the scanner, the pin pad, and the printer to input a response to the data input request.

The digital desk server may determine a business type based on the customer's consulting request, and request consultation acceptance to a plurality of consultant terminals corresponding to the determined business type.

The digital desk apparatus may include: a desk; at least one image display unit disposed on the desk; and a touch input unit disposed on the desk where the customer is seated.

According to the embodiment, a remote consulting service method performed in a digital desk server may include: receiving a customer's consultation request from a digital desk apparatus; requesting consultation acceptance through APs installed in a plurality of consultant terminals on standby based on the customer's consulting request; receiving consultation acceptance information from the AP installed in one consultant terminal among the plurality of consultant terminals; and controlling video connection between the one consultant terminal and the digital desk apparatus based on the consultation acceptance information.

The requesting consultation acceptance to the plurality of consultant terminals may include determining a business type based on the customer's consultation request, and request acceptance of consultation to a plurality of consultant terminals corresponding to the determined business type.

### EFFECT OF INVENTION

According to embodiments, financial works are possible even in the absence of a consultant by providing a remote consulting service system capable of providing images.

In addition, according to embodiments, the efficiency of non-face-to-face banking work with a consultant can be improved by providing an integrated terminal capable of controlling images and devices.

Further, according to embodiments, financial services can be extended and provided by providing a terminal for allowing the consultant terminal to integrally control the device of the digital desk apparatus.

Furthermore, according to embodiments, the remote consulting service system can be implemented more conveniently by providing a device for controlling the image separately.

Moreover, according to embodiments, non-face-to-face financial work can be handled more efficiently by building an integrated digital desk apparatus that can manage ATMs while connecting consultants and customers' images.

### BRIEF DESCRIPTION OF THE DRAWINGS

FIG. 1 is a block diagram showing a remote consulting service system according to a first embodiment.
FIG. 2 is a diagram showing the configuration of a digital desk apparatus of FIG. 1.
FIG. 3 is a diagram showing a remote consulting service method according to the first embodiment.
FIG. 4 is a block diagram showing a remote consulting service system according to a second embodiment.
FIG. 5 is a block diagram showing a remote consulting service system according to a third embodiment.
FIG. 6 is a block diagram showing a remote consulting service system according to a fourth embodiment.
FIG. 7 is a block diagram showing a remote consulting service system according to a fifth embodiment.
FIG. 8 is a diagram showing the configuration of a digital desk apparatus of FIG. 7.
FIG. 9 is a diagram showing a remote consulting service method according to the fifth embodiment.
FIG. 10 is a block diagram showing a remote consulting service system according to a sixth embodiment.
FIG. 11 is a block diagram showing a remote consulting service system according to a seventh embodiment.

### BEST MODE FOR CARRYING OUT THE INVENTION

Hereinafter, embodiments of the present disclosure will be described in detail with reference to the drawings.

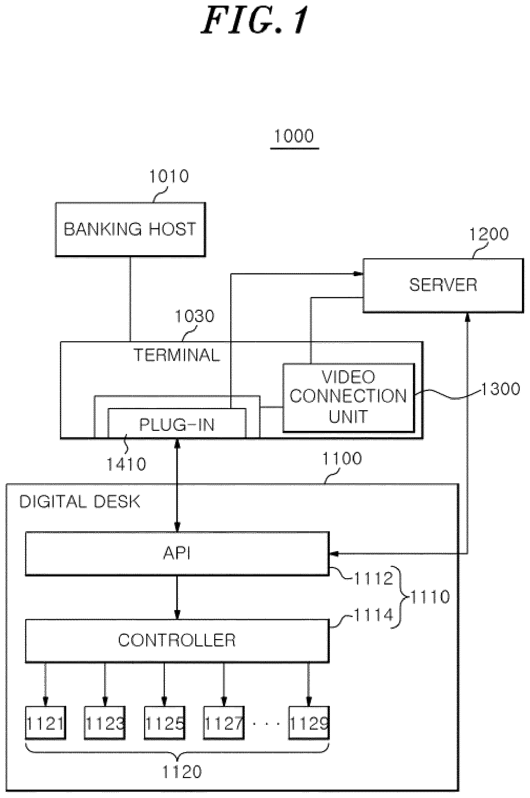

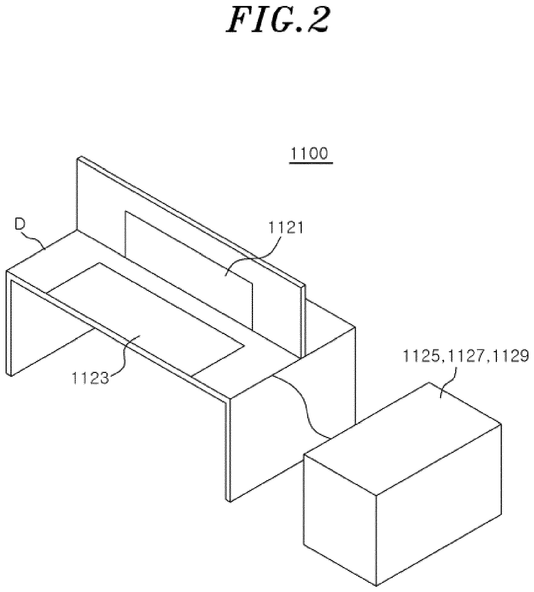

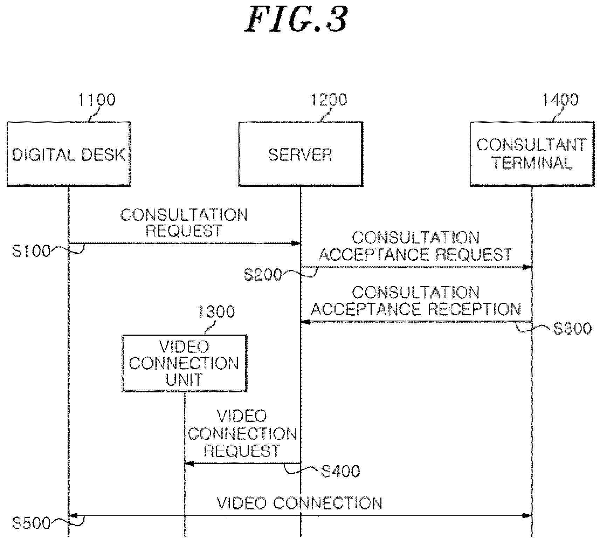

FIG. 1 is a block diagram showing a remote consulting service system according to a first embodiment, FIG. 2 is a diagram showing the configuration of a digital desk apparatus of FIG. 1, and FIG. 3 is a diagram showing a remote consulting service method according to the first embodiment.

Referring to FIG. 1, the remote consulting service system 1000 according to the first embodiment may include a digital desk server 1200, a consultant terminal 1400 including a video connection unit 300, and a digital desk apparatus 1100.

The digital desk server 1200 and the consultant terminal 1400 may control a video connection between a consultant and a customer through communication with the digital desk apparatus 1100. In this case, the digital desk server 1200 may be placed in a call center, but is not limited thereto.

The consultant terminal 1400 may be connected to a banking host server (hereinafter referred to as a 'banking host') 1010. The consultant terminal 1400 may perform communication related to financial work with the banking host 1010 under the control of the consultant. An AP (Application Processor) 1030 may be installed in the consultant terminal 1400 to communicate with the banking host 10. A plug-in 1410 may be installed in the AP 1030, and the digital desk server 1200 may control the consultant terminal 1400 through the plug-in 1410.

The digital desk server 1200 may receive a customer's consulting request from the digital desk apparatus 1100. When a customer requests consulting through the digital desk apparatus 1100, the digital desk server 1200 may receive the customer's consulting request through a controller 1110 installed in the digital desk apparatus 1100.

When a customer's consultation request is received from the controller 1110, the digital desk server 1200 may transmit the consultation request to a consultant who handles a work type suitable for the customer's consultation contents based on the customer's consultation contents. The digital desk server 1200 may determine a plurality of consultants capable of handling the customer's business and transmit a consultation request to the plurality of consultant terminals 1400. In this case, the consultant terminal 1400 may include a mobile phone, a tablet, a personal computer, and a laptop computer, but is not limited thereto.

In addition, the digital desk server 1200 may determine a plurality of consultants available for consultation based on the stand-by work, language, etc. as well as the customer's business type.

When consultants capable of consulting with customers among the plurality of consultants transmit consultation acceptance information to the digital desk server 1200 through their respective consultant terminals 1400, the digital desk server 1200 may determine a consultant to consult with the customer based on the consultation acceptance information received first. The digital desk server 1200 may transmit information of a consultant to consult with the customer to a video connection unit 1300.

The video connection unit 1300 may control the consultant terminal 1400 and a video display unit 1121 disposed on the digital desk apparatus 1100 based on the consultation acceptance information received from the digital desk server 1200, so that a video connection between the consultant and the customer is performed.

The video connection unit 1300 may directly control the consultant terminal 1400 through the plug-in 1410 installed in the consultant terminal 1400. The plug-in 1410 is installed in the system of the consultant terminal 1400, and the video connection unit 1300 may directly control the consultant terminal 1400. Further, the video connection unit 1300 may request video connection through the controller 1110 of the digital desk apparatus 1100.

The remote consulting service system 1000 according to the first embodiment may include the controller 1110. As described above, the controller 1110 may be installed in the digital desk apparatus 1100, but the installation location is not limited.

The controller 1110 may include an API (Application Program Interface) 1112 and a controller 1114. The API 1112 may perform communication with the video connection unit 1300. In addition, the API 1114 may perform communication with the consultant terminal 1400. The API 1112 may receive a video connection request from the video connection unit 1300. The controller 1114 may perform video connection through the video display unit 1121, e.g., a monitor, provided on the digital desk apparatus 1100.

The digital desk apparatus 1100 may perform video connection with the consultant terminal 1400 and, when receiving a data input request from the consultant terminal 1400, may display a screen related to the data input request.

As shown in FIG. 2, the digital desk apparatus 1100 may include a desk D, and a plurality of output units 1120 controlled by the controller 1110.

The desk D may include a lower plate shaped like a desk, and an upper plate disposed between the customer and the consultant, but the shape of the desk D is not limited thereto.

The output unit 1120 may include an image display unit 1121, a touch input unit 1123, a scanner 1125, a pin pad 1127, a printer 1129, and the like. The image display unit 1121 may include a monitor or a transparent display. The image display unit 1121 may be installed on the upper plate of the desk D and disposed between the customer and the consultant. The image display unit 1121 may include two or more image display units, and the number of the image display units is not limited. In this case, the upper plate of the desk D may be formed of a transparent acrylic plate and may support the image display unit 1121.

The touch input unit 1123 may be formed on the lower plate of the desk D where a customer is to be seated. The touch input unit 1123 may receive touch information of the customer. The touch input unit 1123 may receive the customer's touch information selected based on a screen on which financial information presented by the consultant is displayed.

The location where the touch input unit 1123 is disposed is not limited, but it is effective to dispose the touch input unit 1123 at a distance where the customer's hand can reach. The touch input unit 1123 may be a tablet that is connected to the desk D through a separate link without being fixed to the desk D, but the type thereof is not limited.

The scanner 1125, the pin pad 1127, and the printer 1129 may be disposed on one side of the desk D, and their operations may be controlled by the controller 1110.

In this case, the touch input unit 1123, the scanner 1125, the pin pad 1127, and the printer 1129 may be configured as one input unit.

Referring back to FIG. 1, while video consulting is in progress in a state in which the consultant terminal 1400 and the image display unit 1121 of the digital desk apparatus 1100 are connected in a P2P manner, the consultant may request data necessary for consulting through the consultant terminal 1400.

The controller 1110 may receive an input request from the consultant terminal 1400 and control the output unit 1120 disposed on the digital desk apparatus 1100 to transmit ID information, account information, PIN information, etc. input by the customer to the consultant terminal 1400.

The consultant may perform financial consulting using the customer's data and input information, and may terminate the transaction through the consultant terminal 1400 when the financial consulting is finished. The consultant terminal 1400 may transmit transaction end information to the digital desk server 1200.

In a transaction flow using the remote consulting service system according to one embodiment, when the consultant requests ID information through the AP 1030 of the consultant terminal 1400, the AP 1030 may provide a signal to display ID card scanning through the image display unit 1121. Then, when the customer scans an ID card using the scanner 1125, the AP 1030 may receive a scanned image scanned by the customer.

Thereafter, the consultant may inquire customer information and account information from the banking host 1010 and deliver the account information to the AP 1030. The AP 1030 displays account information on the image display unit 1121 of the digital desk apparatus 1100, and the customer may select an account through the touch input unit 1123. In this case, when the customer inputs the PIN information, the corresponding information is transmitted to the consultant terminal 1400 and final bankbook reissuance information may be delivered to the AP 1030. Finally, the digital desk apparatus 1100 may reissue the bankbook to the customer through the printer 1129.

Referring to FIG. 3, the remote consulting service method performed in the digital desk server of the remote consulting service system is as follows.

The digital desk server 1200 may receive a consultation request from the digital desk apparatus 1100 (S100). The consultation request may be transmitted by a request of a customer seated at the digital desk apparatus 100.

The digital desk server 1200 may transmit a consultation acceptance request to the consultant terminal 1400 (S200). The digital desk server 1200 may determine a work type based on the customer's consulting work, and request consultation acceptance to a plurality of consultant terminals 1400 corresponding to the work type.

The digital desk server 1200 may receive consultation acceptance from the consultant terminal 1400 (S300). The digital desk server 1200 may transmit a video connection request for video consultation between the consultant and the customer to the video connection unit 1300 (S400).

For example, when the digital desk server 1200 and the video connection unit 1300 are formed as a single unit, the digital desk server 1200 may perform video connection between the customer and the consultant by directly controlling the consultant terminal 1400 through the plug-in 1410 and requesting video connection to the digital desk apparatus 1100 (S500).

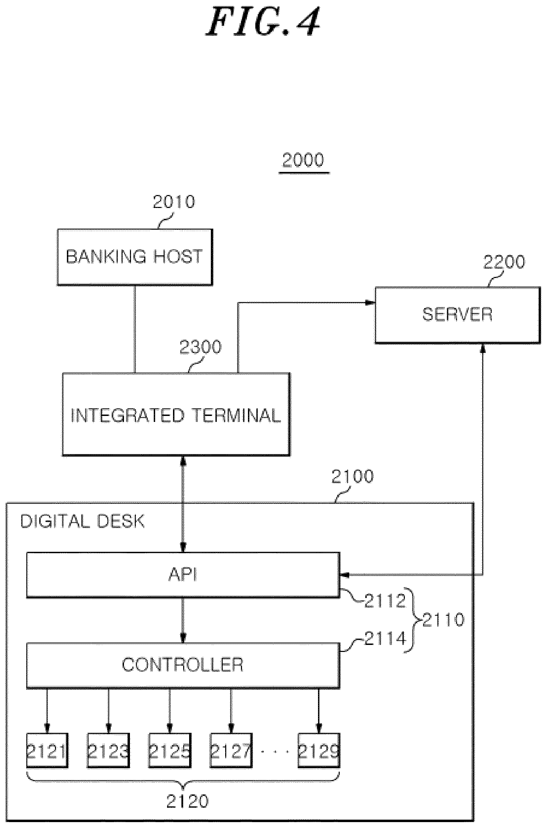

FIG. 4 is a block diagram showing a remote consulting service system according to a second embodiment.

Referring to FIG. 4, the remote consulting service system 2000 according to the second embodiment may include a digital desk server 2200, an integrated terminal 2300, and a digital desk apparatus 2100.

The digital desk server 2200 may receive a customer's consultation request from the digital desk apparatus 2100. When a customer requests consultation through the digital desk apparatus 2100, the digital desk server 2200 may receive the customer's request for consultation through a controller 2110 installed in the digital desk apparatus 2100.

When receiving the customer's consultation request from the controller 2110, based on the customer's consultation contents, the digital desk server 2200 may transmit a consultation request to a consultant who handles a work type suitable for the customer's consultation contents. The digital desk server 2200 may determine a plurality of consultants capable of handling the customer's business and transmit a consultation request to the integrated terminal 2300 of the plurality of consultants. In this case, the consultant's integrated terminal 2300 may include, but is not limited to, a mobile phone, a tablet, a personal computer, and a laptop computer.

The consultant's integrated terminal 2300 may be a terminal that integrates and controls the terminal's AP, video, and device. The integrated terminal 2300 may access a banking host 2010 and the digital desk server 2200 and perform communication therewith.

In addition, the digital desk server 2200 may check a stand-by work and language or the like as well as the customer's business type, and determine a plurality of consultants available for consultation based on the stand-by work and language.

When consultants capable of consulting with the customer, among the plurality of consultants, transmit consultation acceptance information to the digital desk server 2200 through their respective integrated terminals 2300, the digital desk server 2200 may determine the consultant to consult with the customer based on the first received consultation acceptance information. The digital desk server 2200 may transmit information of the consultant to consult with the customer to the integrated terminal 2300.

The integrated terminal 2300 may control an image display unit 2121 disposed on the digital desk apparatus 2100 based on the consultation acceptance information received from the digital desk server 2200 to perform video connection between the consultant and the customer. For example, the integrated terminal 2300 may request video connection through the controller 2110 of the digital desk apparatus 2100.

The digital desk apparatus 2100 may include the controller 2110. The controller 2110 may include an API (Application Program Interface) 2112 and a controller 2114. The API 2112 may communicate with the integrated terminal 2100. The API 2112 may receive a video connection request from the integrated terminal 2300. The controller 2114 may perform video connection through the image display unit 2121, e.g., a monitor, provided on the digital desk apparatus 2100.

The digital desk apparatus 2100 may include an output unit 2120. The output unit 2120 may include an image display unit 2121, a touch input unit 2123, a scanner 2125, a pin pad 2127, a printer 2129, and the like.

The image display unit 2121 may include a monitor or a transparent display. The image display unit 2121 may include two or more image display units, but the number of the image display units is not limited.

The touch input unit 2123 may receive touch information of a customer. The touch input unit 2123 may receive the customer's touch information selected based on a screen on which financial information presented by a consultant is displayed.

The scanner 2125, the pin pad 2127, and the printer 2129 may be disposed on one side of the desk, and their operations may be controlled by the controller 2110.

The remote consulting service system according to the second embodiment has an effect of improving the efficiency of non-face-to-face banking with a consultant by providing the integrated terminal that controls images.

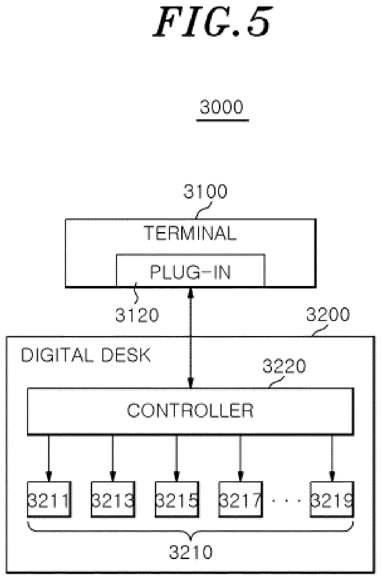

FIG. 5 is a block diagram showing a remote consulting service system according to a third embodiment.

Referring to FIG. 5, the remote consulting service system 3000 according to the third embodiment may include a consultant terminal 3100 and a digital desk apparatus 3200.

The consultant terminal 3100 may be connected to a banking host. The consultant terminal 3100 may perform communication related to financial work with the banking host under the control of the consultant. An AP 3110 is installed in the consultant terminal 3100 to perform communication with the banking host.

A plug-in 3120 may be installed in the AP 3110. The plug-in 3120 may be installed in a system of the consultant terminal 3100. The consultant terminal 3100 may communicate with a controller 3220 that controls devices of the digital desk apparatus 3200 through the plug-in 3120.

The digital desk apparatus 3200 may include an output unit 3120. The output unit 3120 may include an image display unit 3121, a touch input unit 3123, a scanner 3125, a pin pad 3127, a printer 3129, and the like.

The image display unit 3121 may include a monitor or a transparent display. The image display unit 3121 may include two or more image display units, and the number of the image display units is not limited.

The touch input unit 3123 may receive touch information of a customer. The touch input unit 3123 may receive the customer's touch information selected based on a screen on which financial information presented by a consultant is displayed.

The scanner 3125, the pin pad 3127, and the printer 3129 may be disposed on one side of the desk, and their operations may be controlled by the controller 3220.

The remote consulting service system according to the third embodiment has an effect of expanding and providing financial services by allowing the consultant terminal to integrally control the devices of the digital desk apparatus.

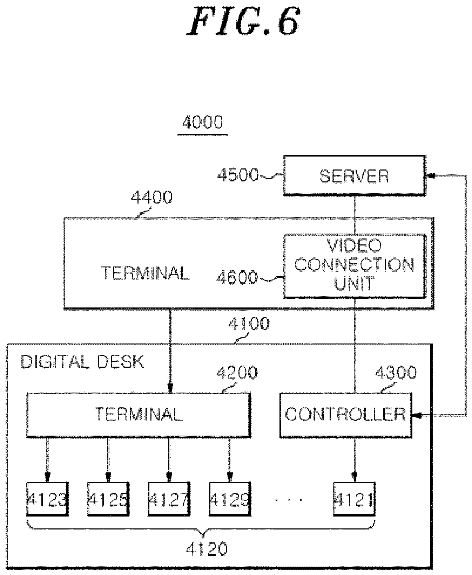

FIG. 6 is a block diagram showing a remote consulting service system according to a fourth embodiment.

Referring to FIG. 6, the remote consulting service system 4000 according to the fourth embodiment may include a digital desk server 4500, a video connection unit 4600, and a digital desk apparatus 4100. In this case, a controller 4300 may be installed in the digital desk apparatus 4100, and the controller 4300 serves to control a connection for video consultation between a consultant and a customer.

The digital desk server 4500 may receive a customer's consultation request from the controller 4300 of the digital desk apparatus 4100. When a customer requests consultation through the digital desk apparatus 4100, the digital desk server 4500 may receive the customer's consultation request through the controller 4300.

When receiving the customer's consultation request from the controller 4300, based on the customer's consultation contents, the digital desk server 4500 may transmit a consultation request to a consultant who handles a business type suitable for the customer's consultation contents. The digital desk server 4500 may determine a plurality of consultants capable of handling the customer's business and transmit the consultation request to the plurality of consultant terminals 4400. In this case, the consultant terminal 4400 may include a mobile phone, a tablet, a personal computer, and a laptop computer, but is not limited thereto.

In addition, the digital desk server 4500 may check, e.g., a stand-by work and language as well as the customer's business type, and determine a plurality of consultants available for consultation based on the stand-by work and language.

When consultants capable of consulting with the customer, among the plurality of consultants, transmit consultation acceptance information to the digital desk server 4500 through their respective integrated terminals 4400, the digital desk server 4500 may determine the consultant to consult with the customer based on the first received consultation acceptance information. The digital desk server 4500 may transmit information of the consultant to consult with the customer to the video connection unit 4600.

Based on the consultation acceptance information received from the digital desk server 4500, the video connection unit 4600 may control the consultant terminal 4400 and the image display unit 4121 disposed in the digital desk apparatus 4100 to perform the video connection between the consultant and the customer.

The digital desk apparatus 4100 may include an output unit 4120. The output unit 4120 may include an image display unit 4121, a touch input unit 4123, a scanner 4125, a pin pad 4127, a printer 4129, and the like. The image display unit 4121 may include a monitor or a transparent display. The image display unit 4121 may include two or more image display units, and the number of the image display units is not limited.

The touch input unit 4123 may receive touch information of a customer. The touch input unit 4123 may receive the customer's touch information selected based on a screen on which financial information presented by the consultant is displayed.

In the output unit 4120, the image display unit 4121 may be operated by the controller 4300, and the operations of the touch input unit 4123, scanner 4125, the pin pad 4127, and the printer 4129 may be controlled by a customer-side terminal 4200 disposed in the digital desk apparatus 4100.

While video consulting is in progress, the consultant may request data necessary for consulting to the customer-side terminal 4200 through the consultant terminal 400.

The customer-side terminal 4200 may control the touch input unit 4123, the scanner 4125, the pin pad 4127, and the printer 4129 to transmit ID information, account information, and PIN information input by the customer to the consultant terminal 4400.

The consultant may proceed with financial consulting using the customer's data and input information, and may terminate the transaction through the consultant terminal 4400 when the financial consulting is finished. The consultant terminal 4400 may transmit transaction end information to the digital desk server 4500.

The remote consulting service system according to the fourth embodiment can be implemented more conveniently by separately including the device for controlling images.

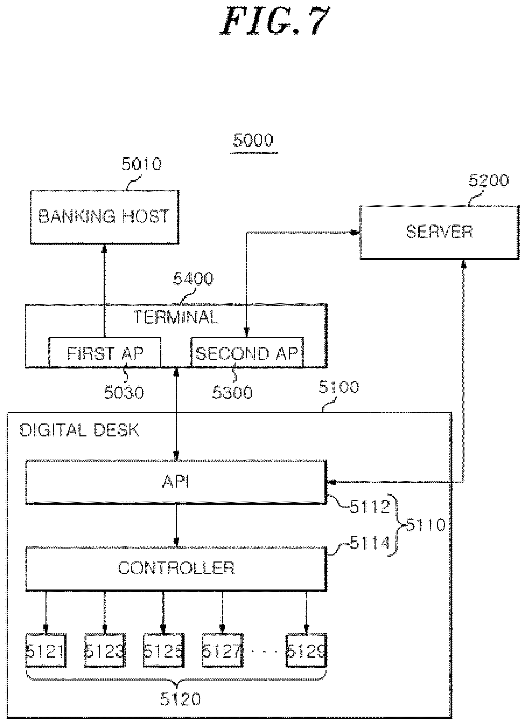

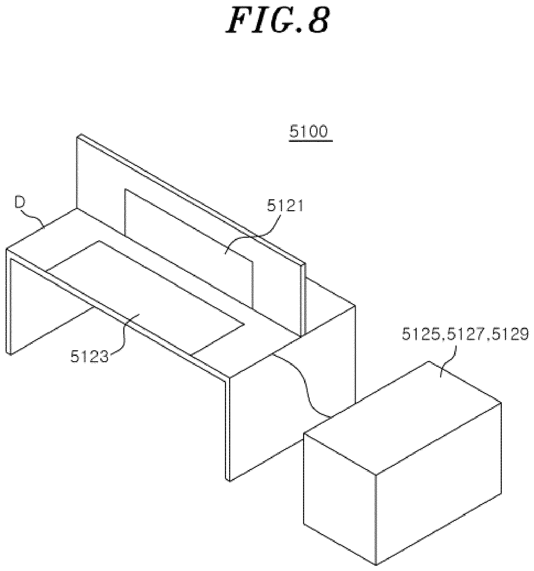

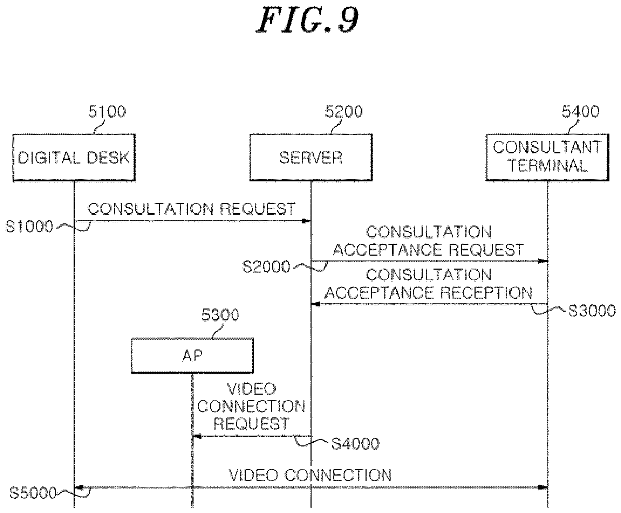

FIG. 7 is a block diagram showing a remote consulting service system according to a fifth embodiment, FIG. 8 is a diagram showing the configuration of a digital desk apparatus, and FIG. 9 is a diagram showing a remote consulting service method according to the fifth embodiment.

Referring to FIG. 7, the remote consulting service system 5000 according to the fifth embodiment may include a digital desk server 5200, a consultant terminal 5400, and a digital desk apparatus 5100.

The digital desk server 5200 and a second AP 5300 may control video connection between the consultant terminal 5400 and a customer through communication with the digital desk apparatus 5100. In this case, the digital desk server 5200 may be disposed in a call center, but is not limited thereto. The second AP 5300 may be installed in the consultant terminal 5400, but is not limited thereto.

The digital desk server 5200 may receive a consultation request of the customer from the digital desk apparatus 5100. When the customer requests consultation through the digital desk apparatus 5100, the digital desk server 5200 may receive the customer's consultation request through a controller 5110 installed in the digital desk apparatus 5100.

When receiving the customer's consultation request from the controller 5110, based on the customer's consultation contents, the digital desk server 5200 may transmit a consultation request to a consultant who handles a business type suitable for the customer's consultation contents. The digital desk server 5200 may determine a plurality of consultants capable of handling the customer's business and transmit a consultation request to the consultant terminals 5400 of the plurality of consultants. In this case, the consultant terminal 5400 may include a mobile phone, a tablet, a personal computer, and a laptop computer, but is not limited thereto.

In addition, the digital desk server 5200 may check, e.g., a stand-by work and language as well as the customer's business type, and determine a plurality of consultants available for consultation based on the stand-by work and language.

When consultants capable of consulting with the customer, among the plurality of consultants, transmit consultation acceptance information to the digital desk server 5200 through their respective integrated terminals 5400, the digital desk server 5200 may determine the consultant to consult with the customer based on the first received consultation acceptance information. The digital desk server 5200 may transmit information of the consultant to consult with the customer to the second AP 5300.

The second AP 5300 may control the consultant terminal 5400 and an image display unit 5121 disposed in the digital desk apparatus 5100 based on the consultation acceptance information received from the digital desk server 5200 to perform video connection between the consultant and the customer.

The second AP 5300 may be, for example, an application installed in the consultant terminal 5400, and the consultant may download the second AP 5300 through an AP store. The second AP 5300 may request video connection through the controller 5110 of the digital desk apparatus 5100.

The consultant terminal 5400 may be connected to a banking host server (hereinafter referred to as a 'banking host') 5010. The consultant terminal 5400 may perform communication related to financial work with the banking host 5010 under the control of the consultant. A first AP 5030 may be installed in the consultant terminal 5400 to communicate with the banking host 5010.

The first AP 5030 may communicate with the second AP 5300 to exchange information received from the digital desk apparatus 5100. The remote consulting service system 5000 according to the fifth embodiment may include the controller 5110. As described above, the controller 5110 may be installed in the digital desk apparatus 5100, but the installation location is not limited.

The controller 5110 may include an API (Application Program Interface) 5112 and a controller 5114. The API 5114 may perform communication with the second AP 5300. In addition, the API 5112 may communicate with the consultant terminal 5400. The API 5112 may receive a video connection request from the second AP 5300. The controller 5114 may perform video connection through the image display unit 5121, e.g., a monitor, provided on the digital desk apparatus 5100.

The digital desk apparatus 5100 may perform video connection with the consultant terminal 5400, and when receiving a data input request from the consultant terminal 5400 through the second AP 5300, may display a screen related to the data input request.

As shown in FIG. 8, the digital desk apparatus 5100 may include a desk D, and a plurality of output units 5120 controlled by the controller 5110.

The desk D may include a lower plate shaped like a desk, and an upper plate disposed between the customer and the consultant, but the shape of the desk D is not limited thereto.

The output unit 5120 may include an image display unit 5121, a touch input unit 5123, a scanner 5125, a pin pad 5127, a printer 5129, and the like. The image display unit 5121 may include a monitor or a transparent display.

Referring back to FIG. 7, while video consulting is in progress in a state in which the consultant terminal 5400 and the image display unit 5121 of the digital desk apparatus 5100 are connected in a P2P manner, the consultant request data necessary for consulting through the second AP 5300 installed in the consultant terminal 5400.

The controller 5110 may receive an input request from the second AP 5300 installed in the consultant terminal 5400 and control the output unit 5120 disposed in the digital desk apparatus 5100 to transmit ID information, account information, PIN information, etc. input by the customer to the second AP 5300 installed in the consultant terminal 5400.

The consultant may perform financial consulting using the customer's data and input information, and may terminate the transaction through the second AP 5300 installed in the consultant terminal 5400 when the financial consulting is finished. The second AP 5300 installed in the consultant terminal 5400 may transmit transaction end information to the digital desk server 5200.

In a transaction flow using the remote consulting service system according to one embodiment, when the consultant requests ID information through the first AP 5030 of the consultant terminal 5400 to the second AP 5300, the second AP 5300 may provide a signal to display ID card scanning through the image display unit 5121. Then, when the customer scans an ID card using the scanner 5125, the second AP 5300 may receive and transmit a scanned image scanned by the customer to the first AP 5030.

Thereafter, the consultant may inquire customer information and account information from the banking host 5010 and transfer the account information from the first AP 5030 to the second AP 5300. The second AP 5300 displays account information on the image display unit 5121 of the digital desk apparatus 5100, and the customer may select an account through the touch input unit 5123. In this case, when the customer inputs the PIN information, the corresponding information is transmitted to the consultant terminal 5400 and final bankbook reissuance information may be delivered to the second AP 5300. Finally, the digital desk apparatus 5100 may reissue the bankbook to the customer through the printer 5129.

Referring to FIG. 9, the remote consulting service method performed in the digital desk server of the remote consulting service system is as follows.

The digital desk server 5200 may receive a consultation request from the digital desk apparatus 5100 (S 1000). The consultation request may be transmitted by a request of a customer seated at the digital desk apparatus 5100.

The digital desk server 5200 may transmit a consultation acceptance request to the consultant terminal 5400 (S2000). The digital desk server 5200 may determine a business type based on the customer's consulting business, and request consultation acceptance to a plurality of consultant terminals 5400 corresponding to the business type.

The digital desk server 5200 may receive consultation acceptance from the consultant terminal 5400 (S3000). The digital desk server 5200 may transmit a video connection request for video consultation between the consultant and the customer to the second AP 5300 (S4000). Accordingly, video connection may be performed between the consultant terminal and the digital desk apparatus (S5000).

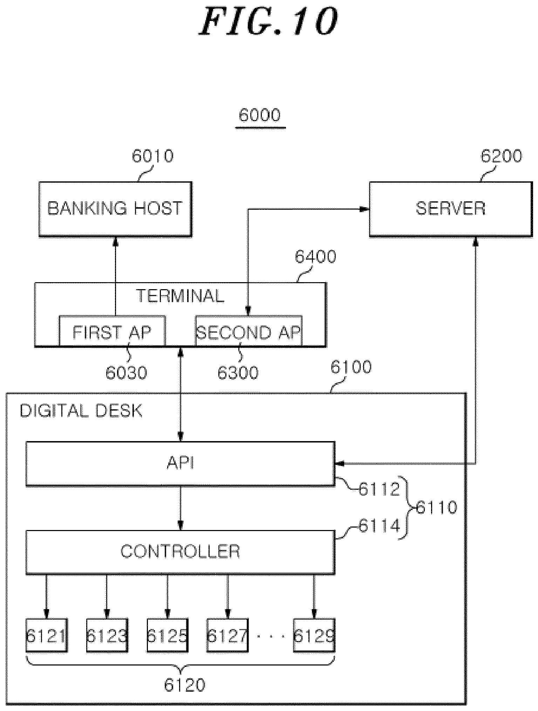

FIG. 10 is a block diagram showing a remote consulting service system according to a sixth embodiment.

Referring to FIG. 10, the remote consulting service system 6000 according to the sixth embodiment may include a digital desk server 6200, a consultant terminal 6400, and a digital desk apparatus 6100.

The digital desk server 6200 may receive a customer's consultation request from the digital desk apparatus 6100. When a customer requests consultation through the digital desk apparatus 6100, the digital desk server 6200 may receive the customer's consultation request through a controller 6110 installed in the digital desk apparatus 6100.

When receiving the customer's consultation request from the controller 6110, based on the customer's consultation contents, the digital desk server 6200 may transmit a consultation request to a consultant who handles a business type suitable for the customer's consultation contents. The digital desk server 6200 may determine a plurality of consultants capable of handling the customer's business and transmit the consultation request to the terminals 6400 of the plurality of consultants. In this case, the consultant terminal 6400 may include a mobile phone, a tablet, a personal computer, and a laptop computer, but is not limited thereto.

In addition, the digital desk server 6200 may check a stand-by work and language and the like as well as the customer's business type, and determine a plurality of consultants available for consultation based on the stand-by work and language.

When consultants capable of consulting with the customer, among the plurality of consultants, transmit consultation acceptance information to the digital desk server 6200 through their respective terminals 6400, the digital desk server 6200 may determine the consultant to consult with the customer based on the first received consultation acceptance information. The digital desk server 6200 may transmit information of the consultant to consult with the customer to a second AP 6300.

The second AP 6300 may be an application installed on the consultant terminal 6400. The consultant terminal 6400 may communicate with the controller 6110, which controls devices of the digital desk apparatus 6100, through the second AP 6300.

The consultant terminal 6400 may be connected to a banking host 6010. The consultant terminal 6400 may perform communication related to financial work with the banking host 6010 under the control of the consultant. A first AP 6030 may be installed in the consultant terminal 6400 to communicate with the banking host 6010.

The first AP 6030 may communicate with the second AP 6300 to exchange information received from the digital desk apparatus 6100. In this case, the second AP 6300 may directly access and register data received from the digital desk apparatus 6100 to the banking host 10. That is, the second AP 6300 may process some of the tasks previously handled by the first AP 6030 instead.

The digital desk apparatus 6100 may include an output unit 6120. The output unit 6120 may include an image display unit 6121, a touch input unit 6123, a scanner 6125, a pin pad 6127, a printer 6129, and the like.

The image display unit 6121 may include a monitor or a transparent display. The image display unit 121 may include two or more image display units, and the number of the image display units is not limited.

The touch input unit 6123 may receive touch information of a customer. The touch input unit 6123 may receive the customer's touch information selected based on a screen on which financial information presented by a consultant is displayed.

The scanner 6125, the pin pad 6127, and the printer 6129 may be disposed on one side of the desk, and their operations may be controlled by the controller 6110.

The remote consulting service system 6000 according to the sixth embodiment has an effect of expanding and providing financial services by allowing the consultant terminal to integrally control the devices of the digital desk apparatus.

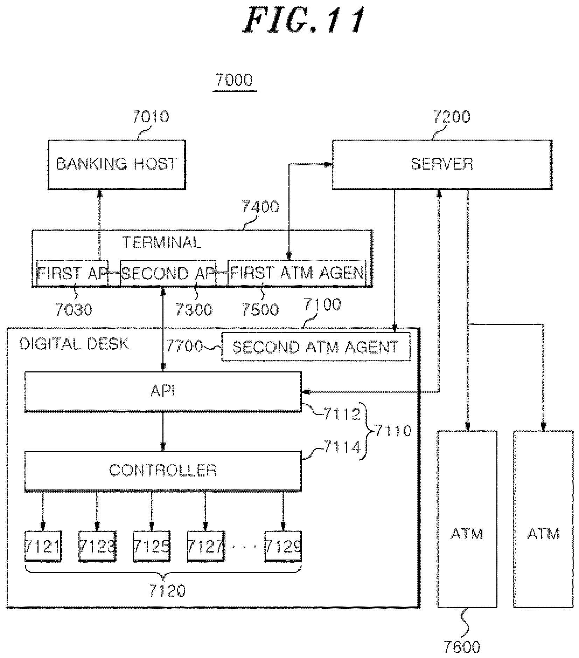

FIG. 11 is a block diagram showing a remote consulting service system according to a seventh embodiment.

Referring to FIG. 11, the remote consulting service system 7000 according to the seventh embodiment includes a digital desk server 7200, a consultant terminal 7400, a digital desk apparatus 7100, and a plurality of ATMs 7600.

The digital desk server 7200 may control video connection between a consultant and a customer by controlling the consultant terminal 7400 and the digital desk apparatus 7100. Since the digital desk server 7200 is the same as the digital desk server 5200 according to the fifth embodiment, a detailed description thereof will be omitted.

Also, the digital desk server 7200 may be connected to ATMs 7600 disposed in commercial banks. The consultant terminal 7400 may control the ATMs 7600 through a first ATM agent 7500. The digital desk apparatus 7100 may control the ATMs 7600 through a second ATM agent 7700.

The digital desk server 7200 may be a server that manages the ATMs 7600. The digital desk server 7200 may perform transaction history management and failure management of the ATMs 7600. In this case, the failure management may include automatic recovery, SNS transmission, service dispatch, and the like.

The digital desk server 7200 may manage the state and version of software of the first ATM agent 7500. The digital desk server 7200 may manage the state and version of software of the second ATM agent 7200.

The remote consulting service system according to the seventh embodiment has an effect of more efficiently handling non-face-to-face financial work by constructing the integrated digital desk server capable of managing the ATMs while performing video connection between a consultant and a customer.

The various embodiments of the present disclosure may be implemented through software (e.g., program) including instructions stored in machine-readable storage media (e.g., memory (internal memory or external memory) readable by a machine (e.g., computer). The machine is a device capable of calling the stored instructions from the storage media and operating according to the called instructions, and may include the electronic devices according to the disclosed embodiments. When the instructions are executed by the controller, the controller may perform a function corresponding to the instructions directly or by using other components under the control of the controller. The instructions may include codes created or executed by a compiler or interpreter. The machine-readable storage media may be provided in the form of a non-transitory storage medium. In this case, non-transitory means that the storage media are tangible but do not contain a signal, and does not distinguish whether data is stored semi-permanently or temporarily in the storage media.

According to embodiments, the methods according to the various embodiments disclosed in the present specification may be included in a computer program product to be provided.

According to one embodiment, a computer readable recording medium may store a computer program which includes instructions to allow a processor to execute a method including: receiving a customer's consultation request from a digital desk apparatus; requesting consultation acceptance through plug-ins installed in a plurality of consultant terminals on standby based on the customer's consulting request; receiving consultation acceptance information from any of the plurality of consultant terminals; and controlling video connection between the consultant terminal and the digital desk apparatus based on the consultation acceptance information.

According to another embodiment, a computer readable recording medium may store a computer program which includes instructions to allow a processor to execute a method including: receiving a customer's consultation request from a digital desk apparatus; requesting consultation acceptance through APs installed in a plurality of consultant terminals on standby based on the customer's consulting request; receiving consultation acceptance information from the AP installed in one consultant terminal among the plurality of consultant terminals; and controlling video connection between the one consultant terminal and the digital desk apparatus based on the consultation acceptance information.

According to one embodiment, a computer program stored in a computer readable recording medium may include instructions to allow a processor to execute a method including: receiving a customer's consultation request from a digital desk apparatus; requesting consultation acceptance through plug-ins installed in a plurality of consultant terminals on standby based on the customer's consulting request; receiving consultation acceptance information from any of the plurality of consultant terminals; and controlling video connection between the consultant terminal and the digital desk apparatus based on the consultation acceptance information.

According to another embodiment, a computer program stored in a computer readable recording medium may include instructions to allow a processor to execute a method including: receiving a customer's consultation request from a digital desk apparatus; requesting consultation acceptance through APs installed in a plurality of consultant terminals on standby based on the customer's consulting request; receiving consultation acceptance information from the AP installed in one consultant terminal among the plurality of consultant terminals; and controlling video connection between the one consultant terminal and the digital desk apparatus based on the consultation acceptance information.

Although it has been described with reference to drawings and embodiments in the above, it is understood that those skilled in the art can modify and change the embodiments in various ways without departing from the technical spirit of the embodiments described in the claims below.

## Claims

1. A remote consulting service system comprising:
a banking host server;
a consultant terminal including an application processor (AP) accessible to the banking host server and a video connection unit for performing video connection with a digital desk apparatus;
the digital desk apparatus that performs video connection with the consultant terminal, and that when receiving a data input request from the consultant terminal, displays a screen related to the data input request; and
a digital desk server that when receiving a consultation request of a customer from the digital desk apparatus, requests a plurality of consultant terminals on standby to accept consultation based on the customer's consultation request, and that receives consultation acceptance information from the consultant terminal among the plurality of consultant terminals.

2. The remote consulting service system of claim 1, wherein the digital desk apparatus includes an application program interface (API) for communicating with the consultant terminal and the digital desk server.

3. The remote consulting service system of claim 1, wherein the digital desk apparatus includes an image display unit, a touch input unit, a scanner, a pin pad, and a printer, and
wherein the digital desk apparatus displays the data input request and controls at least one of the image display unit, the touch input unit, the scanner, the pin pad, and the printer to input a response to the data input request.

4. The remote consulting service system of claim 1, wherein the digital desk server determines a business type based on the customer's consulting request, and requests consultation acceptance to a plurality of consultant terminals corresponding to the determined business type.

5. The remote consulting service system of claim 1, wherein the digital desk apparatus includes:
a desk;
at least one image display unit disposed on the desk; and
a touch input unit disposed on the desk where the customer is seated.

6. A remote consulting service method performed in a digital desk server, the method comprising:
receiving a customer's consultation request from a digital desk apparatus;
requesting consultation acceptance through plug-ins installed in a plurality of consultant terminals on standby based on the customer's consulting request;
receiving consultation acceptance information from any of the plurality of consultant terminals; and
controlling video connection between the consultant terminal and the digital desk apparatus based on the consultation acceptance information.

7. The remote consulting service method of claim 6, wherein the requesting consultation acceptance to the plurality of consultant terminals includes determining a business type based on the customer's consultation request, and requesting acceptance of consultation to a plurality of consultant terminals corresponding to the determined business type.

8. A remote consulting service system comprising:
a banking host server;
a consultant terminal including a first AP accessible to the banking host server and a second AP accessible to the banking host server through communication with the first AP;
a digital desk server that when receiving a consultation request of a customer, requests the consultant terminal on standby among a plurality of consultant terminals on standby to accept consultation based on the customer's consultation request through the second AP, and that receives consultation acceptance information from the second AP of the consultant terminal; and
a digital desk apparatus that performs video connection with the consultant terminal, and that when receiving a data input request from the consultant terminal through the second AP, displays a screen related to the data input request.

9. The remote consulting service system of claim 8, wherein the digital desk apparatus includes an API for communicating with the second AP and the digital desk server.

10. The remote consulting service system of claim 8, wherein the digital desk apparatus includes an image display unit, a touch input unit, a scanner, a pin pad, and a printer, and
wherein the digital desk apparatus displays the data input request and controls at least one of the image display unit, the touch input unit, the scanner, the pin pad, and the printer to input a response to the data input request.

11. The remote consulting service system of claim 8, wherein the digital desk server determines a business type based on the customer's consulting request, and requests consultation acceptance to a plurality of consultant terminals corresponding to the determined business type.

12. The remote consulting service system of claim 8, wherein the digital desk apparatus includes:
a desk;
at least one image display unit disposed on the desk; and
a touch input unit disposed on the desk where the customer is seated.

13. A remote consulting service method performed in a digital desk server, the method comprising:
receiving a customer's consultation request from a digital desk apparatus;
requesting consultation acceptance through APs installed in a plurality of consultant terminals on standby based on the customer's consulting request;
receiving consultation acceptance information from the AP installed in one consultant terminal among the plurality of consultant terminals; and
controlling video connection between the one consultant terminal and the digital desk apparatus based on the consultation acceptance information.

14. The remote consulting service method of claim 13, wherein the requesting consultation acceptance to the plurality of consultant terminals includes determining a business type based on the customer's consultation request, and requesting acceptance of consultation to a plurality of consultant terminals corresponding to the determined business type.
